# EUROPÄISCHE PATENTSCHRIFT

(11) **EP 1 985 175 B1**
(45) Veröffentlichungstag und Bekanntmachung des Hinweises auf die Patenterteilung: **11.01.2012**
(21) Anmeldenummer: 08007326.5
(22) Anmeldetag: 14.04.2008
(51) Int. Cl.: A01K 1/015

(54) **Bodenbelagsplatte für einen Tierstall**
Floor covering plate for a barn
Plaque de revêtement de sol pour une étable

(30) Priorität: 23.04.2007 DE 202007005817 U
(43) Veröffentlichungstag der Anmeldung: 29.10.2008
(73) Patentinhaber: Kraiburg Elastik GmbH, 84529 Tittmoning (DE)
(72) Erfinder: Klinger, Martin, 84489 Burghausen (DE)
(74) Vertreter: Ruttensperger, Bernhard

(56) Entgegenhaltungen:
- EP-A- 0 913 524
- EP-A- 1 096 080
- WO-A-95/19822
- DE-A1- 3 801 445
- DE-A1- 10 206 714

## Beschreibung

Die vorliegende Erfindung betrifft eine Bodenbelagsplatte für einen Tierstall, umfassend einen elastischen Plattenkörper und an einer einem Untergrund zugewandt zu positionierenden Unterseite des elastischen Plattenkörpers eine Mehrzahl von an dem Plattenkörper integral ausgebildeten, elastisch verformbaren Auflagevorsprüngen, mit welchen die Bodenbelagsplatte auf dem Untergrund aufliegend zu positionieren ist, gemäβ dem Oberbegriff des Anspruchs 1.

Bei einer der DE 102 06 714 A1 bekannten Bodenbelagsplatte sind die Auflagevorsprünge noppenartig ausgebildet und in einem wabenartigen Muster an der Unterseite des Plattenkörpers angeordnet. Die in wabenartigem Muster angeordneten Auflagevorsprünge sind zur Stützung derselben durch Verbindungswände miteinander verbunden. In jeder so gebildeten Wabe ist zentral ein weiterer freistehender Auflagevorsprung ausgebildet. Die Verformbarkeit einer derartigen Bodenbelagsplatte beim Belasten durch ein Tier beruht auf der Elastizität des Plattenkörpers bzw. der bei Belastung in ihrer Längsrichtung, die im Wesentlichen senkrecht zu der durch den Plattenkörper aufgespannten Ebene steht, komprimierbaren Vorsprünge. Da die Länge der Vorsprünge begrenzt ist, besteht somit auch eine deutliche Begrenzung bei der durch eine derartige Platte erreichbaren Elastizität bei der Belastung durch ein Tier.

Bei einer als flächenelastisches Fußbodenelement beispielsweise für Sporthallenböden einsetzbaren, aus der DE 38 01 445 A1 bekannten Bodenplatte mit den Merkmalen des Oberbegriffs des Anspruchs 1 ist eine mit einem Grundkörper aufgebaute Kunststoffplatte vorgesehen, an deren einem Untergrund zugewandt zu positionierender Unterseite mehrere schräg angestellte und im Wesentlichen parallel zueinander sich erstreckende Nocken oder Stege vorgesehen sind. Diese Nocken oder Stege lassen eine elastische Deformation in senkrechter Richtung bzw. senkrecht zur Lagerfläche zu, da sie aus dem Grundkörper schräg herausragen.

Die EP 0 913 524 A1 offenbart einen Boden, der für Leichtathletikbahnen eingesetzt werden kann. Dieser umfasst einen Körperbereich, an dessen Unterseite sich entweder senkrecht nach unten oder schräg angestellte zur Abstützung auf dem Untergrund vorgesehene Stützformationen befinden.

Die WO 95/19822 offenbart einen für einen Sportplatz vorgesehenen Bodenbelag, welcher aus elastischem Kunststoff aufgebaut ist und an seiner Unterseite bezüglich einer Vertikallinie schräg gestellte Ausnahmen aufweist, in welche ein aus synthetischem oder natürlichem Kautschuk ausgebildetes Netz eingreift.

Die DE 102 06 714 A1 offenbart einen Bodenbelag für einen Tierstall, an dessen Unterseite eine Vielzahl von mit verschiedener Länge ausgebildeten Stütznoppen vorgesehen ist. Diese sind zum Teil durch Verbindungwände miteinander verbunden, um ein seitliches Abknicken zu vermeiden.

Die EP 1 096 080 A2 offenbart einen Bodenbelag, der an seiner einem Untergrund zugewandt zu positionierenden Unterseite eine Mehrzahl von bezüglich einer Vertikallinie schräg angestellten Auflagerippen aufweist. Einander benachbarte Auflagerippen sind in entgegengesetzter Richtung schräg gestellt.

Es ist die Aufgabe der vorliegenden Erfindung, eine Bodenbelagsplatte für einen Tierstall vorzusehen, welche bei konstruktiv einfacher Ausführung auch bei starker Belastung eine größere Elastizität bereitstellt.

Erfindungsgemäß wird diese Aufgabe gelöst durch eine Bodenbelagsplatte für einen Tierstall gemäß Anspruch 1. Diese umfasst einen elastischen Plattenkörper und an einer einem Untergrund zugewandt zu positionierenden Unterseite des elastischen Plattenkörpers eine Mehrzahl von an dem Plattenkörper integral ausgebildeten, elastisch verformbaren Auflagevorsprüngen, mit welchen die Bodenbelagsplatte auf dem Untergrund aufliegend zu positionieren ist.

Dabei ist weiter vorgesehen, dass die Auflagevorsprünge sich bezüglich des Plattenkörpers schräg gestellt erstrecken.

Bei der erfindungsgemäß aufgebauten Bodenbelagsplatte stehen die Auflagevorsprünge also nicht senkrecht zum Plattenkörper, wie dies aus dem Stand der Technik bekannt sind, sondern verlaufen schräg gestellt, also geneigt zu diesem. Bei einer Belastung durch ein Tier werden somit die Auflagevorsprünge nicht primär auf Kompression belastet bzw. in Kompression verformt, sondern sie biegen bedingt durch ihre Schrägstellung seitlich ab und werden somit in Richtung auf die Unterseite des Plattenköpers zu verformt. Da auf Grund der Elastizität des Aufbaumaterials sowohl für den Plattenkörper als auch die Auflagevorsprünge diese in seitlicher Abknickbewegung wesentlich stärker verformbar sind, als in Kompression, lässt sich somit ein wesentlich größeres Verformungsvolumen und somit auch eine bessere Elastizität bei der Belastung durch Tiere erhalten.

Die Auflagevorsprünge können in einer Mehrzahl von Vorsprungsreihen angeordnet sein, wobei vorzugsweise weiterhin dann die Auflagevorsprünge unmittelbar benachbarter Vorsprungsreihen zueinander versetzt angeordnet sind. Auf diese Art und Weise wird eine sehr gleichmäßige Verteilung der Auflagevorsprünge und somit auch eine sehr gleichmäßige Abstützung zum Untergrund hin erlangt.

Um ein gegenseitiges Verspreizen sich verfomender Auflagevorsprünge zu verhindern, wird vorgeschlagen, dass die Auflagevorsprünge in der gleichen Richtung schräg gestellt sind.

Bei einer alternativen Ausgestaltungsform kann vorgesehen sein, dass die Auflagevorsprünge an dem Plattenkörper mit unterschiedlicher Schrägstellungsorientierung angeordnet sind.

Um einerseits die gewünschte seitliche Verformbarkeit erlangen zu können, andererseits jedoch auch bei den einzelnen Auflagevorsprüngen eine ausreichende Stabilität gewährleisten zu können, wird vorgeschlagen, dass die Auflagevorsprünge plattenartig ausgebildet sind, wobei weiterhin vorgesehen sein kann, dass die Auflagevorsprünge in Richtung vom Plattenkörper weg sich verjüngend ausgebildet sind. Auf diese Art und Weise wird insbesondere auch eine sehr stabile Anbindung der plattenartigen Auflagevorsprünge an den Plattenkörper der Bodenbelagsplatte gewährleistet.

Bei dem erfindungsgemäßen Aufbau ist vorgesehen, dass den Auflagevorsprüngen über die Unterseite des Plattenkörpers hervorstehende Abstützvorsprungsanordnungen zugeordnet sind, auf welchen ein freies Ende der Auflagevorsprünge bei Verformung derselben in Abstand zur Unterseite zur Auflage kommen kann. Es wird somit sichergestellt, dass auch bei vergleichsweise starker Belastung ein Auflagevorsprung sich nicht vollständig an die Unterseite des Plattenkörpers anlegt, sondern in seinem freien Endbereich in Abstand zum Plattenköper gehalten wird. Somit verläuft der seitlich abgebogene Auflagevorsprung grundsätzlich noch in Abstand zur Unterseite des Plattenkörpers, so dass ein weiteres Verformungsvolumen bei noch stärkerer Belastung erhalten bleibt.

Beispielsweise kann vorgesehen sein, dass die Abstützvorsprungsanordnungen zwei nebeneinander liegende Abstützvorsprünge umfassen.

Um insbesondere bei plattenartiger Ausgestaltung der Auflagevorsprünge diese im Bereich ihrer freien Enden sicher stützen zu können, wird vorgeschlagen, dass im Angrenzungsbereich der Auflagevorsprünge an den Plattenkörper wenigstens zwei in Abstand zueinander angeordnete Abstützvorsprünge ausgebildet sind. Das Vorsehen derartiger Abstützvorsprünge dort, wo ein jeweiliger Auflagevorsprung aus dem Plattenkörper hervorsteht, führt weiterhin zu einer erhöhten Stabilität in diesem Angrenzungsbereich der Auflagevorsprünge an den Plattenkörper.

Weiter kann vorgesehen sein, dass die nebeneinander angeordneten Abstützvorsprünge zweier nebeneinander angeordneter Auflagevorsprünge die Abstützvorsprungsanordnung für einen weiteren Auflagevorsprung bilden.

Um auch bei sehr starker Belastung ein zu starkes Abkrümmen der Auflagevorsprünge insbesondere in ihrem Angrenzungsbereich an den Plattenkörper zu vermeiden, bei dem erfindungsgemäßen Aufbau alternativ oder zusätzlich vorgesehen, dass in Zuordnung zu den Auflagevorsprüngen über die Unterseite des Plattenkörpers hervorstehende Zwischen-Abstützvorsprünge vorgesehen sind, auf welchen die Auflagevorsprünge bei Verformung derselben in einem Bereich zwischen dem Ausgrenzungsbereich an den Plattenkörper und deren freiem Ende in Abstand zur Unterseite zur Auflage kommen können.

Die vorliegende Erfindung betrifft ferner einen Bodenbelag für einen Tierstall, welcher eine Mehrzahl von erfindungsgemäß ausgestalteten Bodenbelagsplatten umfasst.

Ferner betrifft die vorliegende Erfindung einen Stallboden für einen Tierstall, umfassend einen erfindungsgemäßen Bodenbelag auf einem festen Untergrund, beispielsweise einem Betonuntergrund.

Die Erfindung wird nachfolgend mit Bezug auf die beiliegenden Figuren detailliert beschrieben. Es zeigt:
- Fig. 1: eine perspektivische Ansicht eines Teils einer Bodenbelagsplatte für einen Tierstall;
- Fig. 2: eine Ansicht der in Fig. 1 dargestellten Platte, betrachtet von ihrer Unterseite;
- Fig. 3: eine Schnittdarstellung der in Fig. 2 gezeigten Platte, geschnitten längs einer Linie III-III, im unbelasteten Zustand der Bodenbelagsplatte;
- Fig. 4: eine der Fig. 3 entsprechende Ansicht im belasteten Zustand.

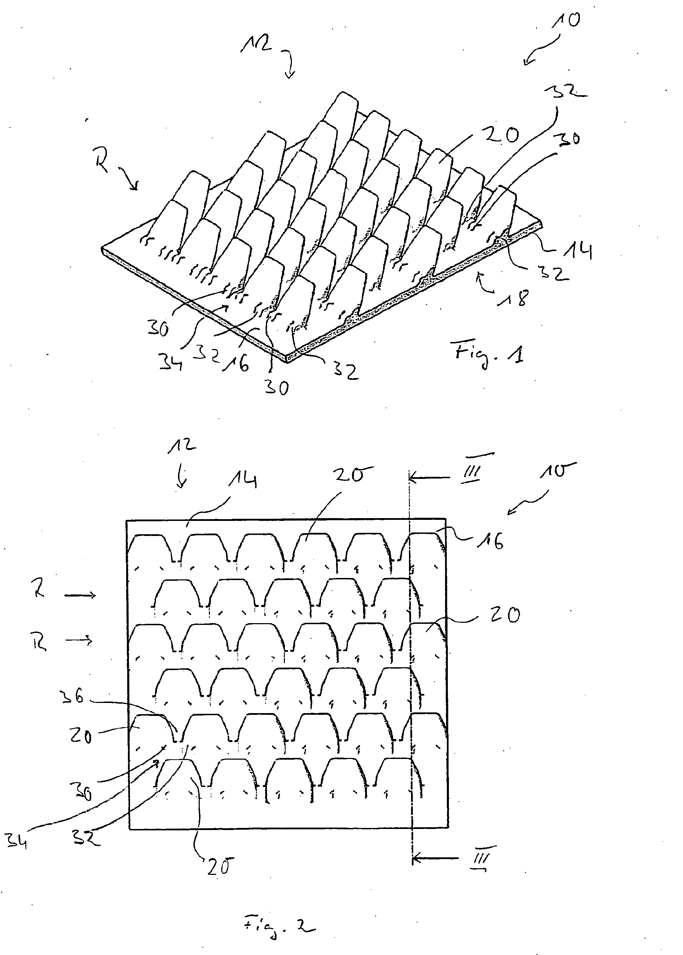

Die Fig. 1 und 2 zeigen eine erfindungsgemäß aufgebaute Bodenbelagsplatte bzw. einen Ausschnitt einer derartigen Bodenbelagsplatte 10, wie sie in einem Tierstall, beispielsweise einem Rinderstall, verwendet werden kann. Eine derartige Bodenbelagsplatte 10 bzw. ein mit derartigen Bodenbelagsplatten 10 aufgebauter Bodenbelag liegt auf einem festen Untergrund, wie z. B. einer Betonplatte; auf und kann bevorzugt im Liegebereich in Tierställen eingesetzt werden. Grundsätzlich ist jedoch auch der Einsatz in Bereichen denkbar, in welchen Tiere sich zu ihren Liegeplätzen bewegen.

Die in den Fig. 1 und 2 von der Unterseite 16, also der dem Untergrund zugewandt zu positionierenden Seite her betrachtete Bodenbelagsplatte 10 ümfasst einen Plattenkörper 14 mit im Wesentlichen gleichmäßiger Dicke im Bereich von 2 bis 3 cm. Der Plattenkörper 14 weist eine in Fig. 1 und auch in Fig. 2 erkennbare Unterseite 16 auf, welche dem festen Untergrund zugewandt zu positionieren ist, sowie an der der Unterseite 16 entgegengesetzten Seite eine Oberseite 18, auf welcher die Tiere sich bewegen oder liegen können.

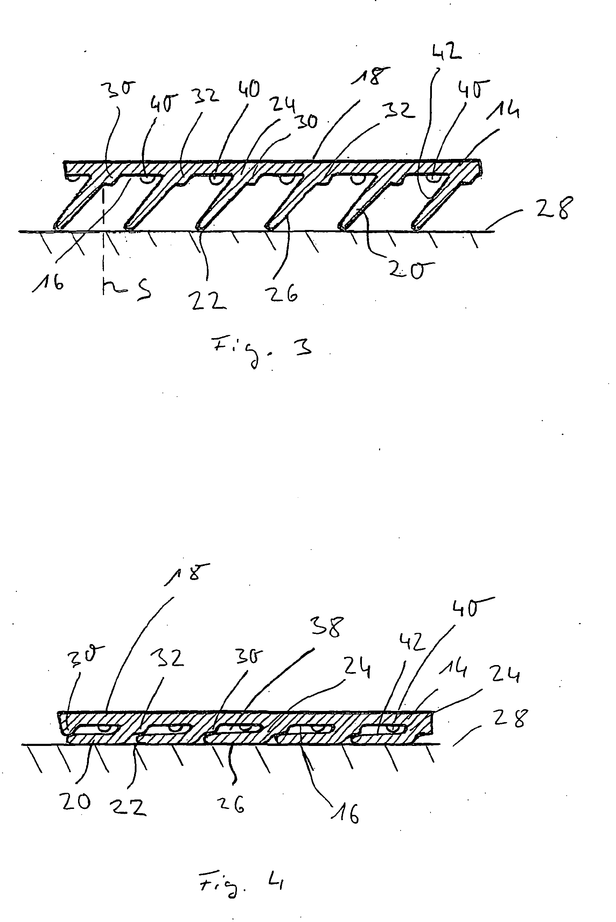

An der Unterseite 16 erstrecken sich vom Plattenkörper 14 Auflagevorsprünge 20. Man erkennt auch in Fig. 3, dass diese Auflagevorsprünge 20 vom Plattenkörper 14 derart abstehen, dass sie zu einer zur Ebene des Plattenkörpers 14 orthogonal stehenden Senkrechten S bzw. auch zum Plattenkörper 14 selbst schräg gestellt, also unter einem Neigungswinkel geneigt, verlaufen. Dabei sei betont, dass in den Fig. 1, 2 und 3 ein unbelasteter Zustand einer derartigen Bodenbelagsplatte 10 gezeigt ist.

Die Auflagevorsprünge 14 sowie alle nachfolgend noch erläuterten Details der Bodenbelagsplatte 10 sind mit dem Plattenkörper 14 integral ausgebildet, so dass die gesamte Bodenbelagsplatte 10 aus einem durchgehenden Material bzw. Materialblock besteht. Vorzugsweise wird zum Aufbau einer derartigen Bodenbelagsplatte 10 Gummigranulat verwendet, das beispielsweise durch Recycling von Autoreifen oder dergleichen gewonnen werden kann. Beim Herstellungsvorgang wird dieses Gummigranulat in eine Form eingegeben und unter Druck und Wärmeeinwirkung durch Vulkanisation oder durch Einsatz eines Klebstoffs, wie z.B. Polyurethan, verbacken, so dass durch Vernetzung oder die zwischen den einzelnen Granulatpartikeln vorhandene Klebstoffschicht ein fester Materialverbund entsteht. Durch den Einsatz derartigen Gummi- oder gummiartigen Materials ist sichergestellt, dass die Bodenbelagsplatte 10 bei ausreichender Festigkeit und Resistenz gegen die auftretenden Belastungen auch eine Elastizität bereitstellt, die sowohl eine Verformung des Plattenfkörpers 14 als insbesondere auch eine Verformung der Auflagevorsprünge 20 zulässt.

Man erkennt in den Fig. 1 und 2, dass die Auflagevorsprünge 20 selbst plattenartig ausgestaltet sind, so dass sich an der von der Unterseite 16 des Plattenkörpers 14 durch die Schrägstellung abgewandt liegenden Seite zwischen den freien Enden 22 und dem Bereich 24 der Angrenzung an den Plattenkörper 14 eine Auflagefläche 26 bildet, mit welcher im Belastungsfalle die Auflagevorsprünge 20 auf dem festen Untergrund 28, also beispielsweise einer Betonplatte, aufliegen.

Man erkennt in den Fig. 1 und 2 weiter, dass die Auflagevorsprünge 20 nebeneinander in Reihen R angeordnet sind, und dass die in unmittelbar benachbarten Reihen R angeordneten Auflagevorsprünge 20 zueinander versetzt liegen. Beispielsweise kann die Anordnung derart sein, dass jede zweite Reihe R mit in Flucht zueinander liegenden Auflagevorsprüngen 20 vorgesehen ist, während dazwischen liegende Reihen R jeweils um die halbe Breite eines Auflagevorsprungs, selbstverständlich unter Berücksichtigung auch des gegenseitigen seitlichen Abstands der Auflagevorsprünge 20, verschoben sind. Weiter erkennt man, dass alle Auflagevorsprünge 20 in der gleichen Schrägstellungsrichtung und auch mit dem gleichen Schrägstellungausmaß, also im gleichen Neigungswinkel bezüglich des Plattenkörpers 14 bzw. der Senkrechten S angeordnet sind, so dass sich ein im Wesentlichen gleichmäßiges Muster von Auflagevorsprünge 20 an der Unterseite 16 ergibt.

Im Angrenzungsbereich der Auflagevorsprünge 20 an den Plattenkörper 14 sind bei jedem Auflagevorsprung 20 zwei in seitlichem Abstand zueinander vorgesehene und über die Unterseite 16 hervorstehende Abstützvorsprünge 30, 32 gebildet. Diese Abstützvorsprünge 30, 32 sind an derjenigen Seite des zugeordneten Auflagevorsprungs 20 vorgesehen, an welcher auch die Auflagefläche 26 gebildet ist und sorgen zum einen für eine erhöhte Stabilität in demjenigen Bereich, in welchem ein jeweiliger Auflagevorsprung 20 an dem Plattenkörper 14 angrenzt. Durch das Vorsehen diskreter Abstützvorsprünge 30, 32 und nicht eines durchlaufenden Abstützbereichs, wird weiterhin auch im Angrenzungsbereich 24 eine ausreichende Flexibilität bzw. Elastizität der Auflagevorsprünge 20 gewährleistet. Weiterhin bilden jeweils ein Abstützvorsprung 30 eines Auflagevorsprungs 20 und ein Abstützvorsprung 32 eines in derselben Reihe unmittelbar benachbarten weiteren Auflagevorsprungs 20 eine Abstützvorsprungsanordnung 34 für einen Auflagevorsprung 20 einer unmittelbar benachbarten Reihe R. Die beiden Abstützvorsprünge 30, 32 einer Abstützvorsprungsanordnung 34 sind in Reihenrichtung durch einen Zwischenraum 36 zwischen den beiden benachbarten Auflagevorsprüngen 20 getrennt. In der Darstellung der Fig. 2 sind also dem in der untersten Reihe links außen angeordneten Auflagevorsprung 20 die beiden darüber erkennbaren Abstützvorsprünge 30, 32 der unmittelbar folgenden Reihe R zugeordnet.

Neben der Funktionalität zum Erhöhen der Stabilität im Bereich der Anbindung oder Angrenzung der Auflagevorsprünge 20 an den Plattenkörper 14 sorgen die Abstützvorsprünge 30, 32 der verschiedenen Abstützvorsprungsanordnungen 34 dafür, dass im Belastungsfalle die freien Enden 22 der Auflagevorsprünge 20 sich nicht unmittelbar gegen die Unterseite 16 des Plattenkörpers 14 anlegen können, sondern, wie dies im Zustand der Fig. 4 erkennbar ist, durch den Kontakt mit den Auflagevorsprüngen 30 bzw. 32 in einem der Höhe dieser Auflagevorsprünge 30, 32 über der Unterseite 16 entsprechenden Ausmaß in Abstand zu dieser Unterseite 16 verbleiben. Die Folge davon ist, dass im Belastungsfalle, also beim Betreten oder Aufliegen eines Tieres, zwischen den dann in definierter Art und Weise seitlich bezüglich ihres in Fig. 3 erkennbaren schräg gestellten Grundzustandes abgebogenen Auflagevorsprüngen 20 und der Unterseite 16 Kammern 38 gebildet sind. Diese Kammern 38 ermöglichen dann, wenn die freien Enden 22 auf den zugeordneten Auflagevorsprüngen 30, 32 aufliegen, bei noch stärkerer Belastung eine weitere Flexibilität durch Annähern der mit ihren Auflageflächen 26 bereits auf dem Untergrund 28 aufliegenden Auflagevorsprünge 20 an den Plattenkörper 14. Da dies jedoch mit Abstützung der Auflagevorsprünge 20 sowohl in ihren freien Enden 22 als auch in den Angrenzungsbereichen 24 bezüglich des Plattenkörpers 14 erfolgt, ist hier eine höhere Steifigkeit gewährleistet.

Man erkennt in Fig. 3 und in Fig. 4 weiterhin, dass an der Unterseite 16 des Plattenkörpers 14 jeweils nahe an dem Angrenzungsbereich 24 eines jeweiligen Auflagevorsprungs 20 in Zuordnung zu jedem Auflagevorsprung 20 ein oder mehrere Zwischen-Abstützvorsprünge 40 vorgesehen sind. Diese liegen also nahe am Angrenzungsbereich 24 und unter der jeweiligen Rückseite 42 der Auflagevorsprünge. In dem in Fig. 4 gezeigten Belastungsfalle weisen diese Rückseiten 42 zum Teil noch einen geringen Abstand zu den Zwischen-Abstützvorsprüngen 40 auf. Bei noch weitergehender Belastung treten jedoch die Rückseiten 42 nahe an dem jeweils zugeordneten Angrenzungsbereich 24 in Kontakt mit den Zwischen-Abstützvorsprüngen 40. Diese verhindern dann eine noch weitere seitliche Abbiegebewegung der Auflagevorsprünge 20. Dies sorgt für eine Entlastung bzw. eine Begrenzung des seitlichen Abbiegens nahe den Angrenzungsbereichen 24 und verhindert somit ein zu starkes Biegen mit der Gefahr, dass das Aufbaumaterial der Bodenbelagsplatte im Angrenzungsbereich 24 reißt. Wie bereits vorangehend dargelegt, sorgen auch die jeweils an der anderen Seite der Auflagevorsprünge 20 vorgesehenen Abstützvorsprünge 30, 32 für eine erhöhte Stabilität in diesem Angrenzungsbereich 24.

Mit einer erfindungsgemäß aufgebauten Bodenbelagsplatte 10 bzw. einem eine Mehrzahl derartiger Bodenbelagsplatten 10 umfassenden Bodenbelag für einen Tierstall wird aufgrund der Tatsache, dass nicht die Kompressibilität des elastischen Aufbaumaterials genutzt wird, sondern die Flexibilität bei der seitlichen Abbiegebewegung in definierter Art und Weise genutzt wird, ein sehr großes Elastizitätsvolumen erreicht. Beispielsweise können die Auflagevorsprünge eine Länge von 6 bis 7 cm aufweisen, so dass sie, bedingt durch ihre Schrägstellung bezüglich des Plattenkörpers 14, etwa 5 bis 6 cm über die Unterseite 16 überstehen. Bei einer Vorstandshöhe der Abstützvorsprünge 30, 32 über die Unterseite 16 von etwa 1 cm ergibt sich somit ein Federweg bzw. Elastizitätsvolumen von etwa 3 bis 4 cm. Dies ist selbstverständlich durch entsprechende Auswahl der Länge und der Schrägstellung der Auflagevorsprünge 20 und auch deren Dicke einstellbar. Auch die Breite der plattenartig ausgestalteten Auflagevorsprünge 20 kann zum Vorgeben eines bestimmten Elastizitätsverhaltens in definierter Art und Weise eingestellt werden. Weiterhin können die Auflagevorsprünge 20 in Richtung zu ihren freien Enden 22 hin sich verjüngend ausgebildet sein. Weiter sei darauf hingewiesen, dass die Auflagevorsprünge 20 ausgehend vom Plattenkörper 14 sich geradlinig erstreckend ausgebildet sein können. Grundsätzlich ist jedoch auch eine gekrümmte Struktur, beispielsweise mit einer konvex ausgebildeten Auflagefläche 26, möglich.

Weiterhin ist es selbstverständlich, dass die Bodenbelagsplatten 10 in ihrem Randbereich an der Unterseite 16 mit einem oder mehreren seitlich aufeinander folgenden nach unten vorspringenden schürzenartigen Abschlussbereichen ausgebildet sein können, welche eine über die Unteseite 16 auch vorspringende Umrandung der Auflagevorsprünge 20 gewährleisten können. Auch können in ihren Umfangsrandbereichen die Bodenbelagsplatten 10 mit einer Verbindungsstruktur ausgebildet sein, um unmittelbar nebeneinander liegende Bodenbelagsplatten 10 miteinander fest zu verbinden. Auch die Oberseite 18, mit welcher die Tiere in unmittelbaren Kontakt treten können, kann für eine erhöhte Standfestigkeit strukturiert sein, beispielsweise mit einer nach. Art eines Hammerschlags gebildeten Strukturierung.

Weiter ist es selbstverständlich möglich, dass abweichend von der dargestellten gleichmäßigen Orientierung der Auflagevorsprünge 20 diese auch in statistischer Verteilung hinsichtlich ihrer Schrägstellungsrichtung angeordnet sein können. Auch das Vorsehen einer Mehrzahl von tellerrandartiger Vorsprungsstrukturen an der Unterseite 16, die dann bei Belastung nach außen aufgebogen werden können, ist möglich. Die tellerradartigen Strukturen können dann in Umfangsrichtung unterteilt sein, so dass sich mehrere eine Gesamtstruktur bildende Einzelabschnitte ergeben, von welchen jeder einen Auflagevorsprung bildet.

## Patentansprüche

1. Bodenbelagsplatte für einen Tierstall, umfassend einen elastischen Plattenkörpers (14) und an einer einem Untergrund (28) zugewandt zu positionierenden Unterseite (16) des elastischen Plattenkörpers (14) eine Mehrzahl von an dem Plattenkörper (14) integral ausgebildeten, elastisch verformbaren Auflagevorsprüngen (20), mit weichen die
Bodenbelagsplatte (10) auf dem Untergrund (28) aufliegend zu positionieren ist, wobei die Auflagevorsprünge (20) sich bezüglich des Plattenkörpers (14) schräg gestellt erstrecken,
**dadurch gekennzeichnet, dass** den Auflagevorsprüngen (20) über die Unterseite (16) des Plattenkörpers (14) hervorstehende Abstützvorsprungsanordnungen (34) zugeordnet sind, auf welchen ein freies Ende (22) der Auflagevorsprünge (20) bei Verformung derselben in Abstand zur Unterseite (16) zur Auflage kommen kann oder/und dass in Zuordnung zu den Auflagevorsprüngen (20) über die Unterseite (16) des Plattenkörpers (14) hervorstehende Zwischen-Abstützvorsprünge (40) vorgesehen sind, auf welchen die Auflagevorsprünge (20) bei Verformung derselben in einem Bereich zwischen dem Angrenzungsbereich (24) an den Plattenkörper (14) und deren freiem Ende (22) in Abstand zur Unterseite (16) zur Auflage kommen können.

2. Bodenbelagsplatte nach Anspruch 1,
**dadurch gekennzeichnet, dass** die Auflagevorsprünge (20) in einer Mehrzahl von Vorsprungsreihen (R) angeordnet sind.

3. Bodenbelagsplatte nach Anspruch 2,
**dadurch gekennzeichnet, dass** die Auflagevorsprünge (20) unmittelbar benachbarter Vorsprungsreihen (R) zueinander versetzt angeordnet sind.

4. Bodenbelagsplatte nach einem der Ansprüche 1 bis 3,
**dadurch gekennzeichnet, dass** die Auflagevorsprünge (20) in der gleichen Richtung schräg gestellt sind.

5. Bodenbelagsplatte nach Anspruch 1,
**dadurch gekennzeichnet, dass** die Auflagevorsprünge (20) an dem Plattenkörper (14) mit unterschiedlicher Schrägstellungsorientierung angeordnet sind.

6. Bodenbelagsplatte nach einem der Ansprüche 1 bis 5,
**dadurch gekennzeichnet, dass** die Auflagevorsprünge (20) plattenartig ausgebildet sind.

7. Bodenbelagsplatte nach einem der Ansprüche 1 bis 6,
**dadurch gekennzeichnet, dass** die Auflagevorsprünge (20) in Richtung vom Plattenkörper (14) weg sich verjüngend ausgebildet sind.

8. Bodenbelagsplatte nach einem der Ansprüche 1 bis 7,
**dadurch gekennzeichnet, dass** die Abstützvorsprungsanordnungen (34) zwei nebeneinander liegende Abstützvorsprünge (30, 32) umfassen.

9. Bodenbelagsplatte nach Anspruch 8,
**dadurch gekennzeichnet, dass** im Angrenzungsbereich (24) der Auflagevorsprünge (20) an den Plattenkörper (14) wenigstens zwei in Abstand zueinander angeordnete Abstützvorsprünge (30, 32) ausgebildet sind.

10. Bodenbelagsplatte nach Anspruch 9,
**dadurch gekennzeichnet, dass** die nebeneinander angeordneten Abstützvorsprünge (30, 32) zweier nebeneinander angeordneter Auflagevorsprünge (20) die Abstützvorsprungsanordnung (34) für einen weiteren Auflagevorsprung (20) bilden.

11. Bodenbelag für eine Tierstall, umfassend eine Mehrzahl von Bodenbelagsplatten (10) nach einem der vorangehenden Ansprüche.

12. Stallboden für einen Tierstall, umfassend einen Bodenbelag nach Anspruch 11 auf einem festen Untergrund, insbesondere Betonuntergrund.

## Claims

1. A floor covering panel, in particular for an animal stall, comprising an elastic panel body (14) and on an underside (16) of the elastic panel body (14) facing a subsurface (28) a plurality of elastically deformable supporting projections (20) which are formed integrally on the panel body (14) and with which the floor covering panel (1) is to be positioned supported on the subsurface (28), wherein the supporting projections (20) extend set at an angle in relation to the panel body (14), **characterised in that** the supporting projections (20) are associated with support projection assemblies (34) which project over the underside (16) of the panel body (14) and on which a free end (22) of the supporting projections (20), upon deformation thereof, can be supported at a distance from the underside (16), and/or **in that** intermediate support projections (40) projecting over the underside (16) of the panel body (14) are provided in association with the supporting projections (20), on which intermediate support projections the supporting projections (20) can be supported, upon deformation thereof, at a distance from the underside (16) in a region between the zone (24) adjoining the panel body (14) and their free end (22).

2. A floor covering panel according to Claim 1, **characterised in that** the supporting projections (20) are arranged in a plurality of projection rows (R).

3. A floor covering panel according to Claim 2, **characterised in that** the supporting projections (20) of directly adjacent projection rows (R) are arranged offset relative to one another.

4. A floor covering panel according to any one of Claims 1 to 3, **characterised in that** the supporting projections (20) are set at an angle in the same direction.

5. A floor covering panel according to Claim 1, **characterised in that** the supporting projections (20) are arranged on the panel body (14) with different angular position orientation.

6. A floor covering panel according to any one of Claims 1 to 5, **characterised in that** the supporting projections (20) are of lamellar form.

7. A floor covering panel according to any one of Claims 1 to 6, **characterised in that** the supporting projections (20) are formed tapering away from the panel body (14).

8. A floor covering panel according to any one of Claims 1 to 7, **characterised in that** the support projection assemblies (34) comprise two adjacent support projections (30,32).

9. A floor covering panel according to Claim 8, **characterised in that** in the zone (24) of the supporting projections (20) adjoining the panel body (14) there are formed at least two support projections (30,32) arranged at a distance apart.

10. A floor covering panel according to Claim 9, **characterised in that** the adjacent support projections (30,32) of two adjacent supporting projections (20) form the support projection assemblies (34) for a further supporting projection (20).

11. A floor covering for an animal stall, comprising a plurality of floor panels (10) according to one of the preceding Claims.

12. A stall floor for an animal stall, comprising a floor covering according to Claim 11 on a solid subsurface, in particular a concrete subsurface.

## Revendications

1. Plaque de revêtement de sol pour une étable, comprenant un corps de plaque élastique (14) et sur un côté inférieur (16) du corps de plaque élastique (14) à positionner tourné vers un fond (28) une pluralité de saillies d'appui (20) déformables élastiquement, réalisées intégralement sur le corps de plaque (14), avec lesquelles la plaque de revêtement de sol (10) doit être positionnée de manière à reposer sur le fond (28), les saillies d'appui (20) s'étendant en biais par rapport au corps de plaque (14),
**caractérisée en ce qu'**aux saillies d'appui (20) sont associés des ensembles de saillies de support (34) dépassant du côté inférieur (16) du corps de plaque (14), sur lesquels une extrémité libre (22) des saillies d'appui (20) peut venir s'appuyer lors de leur déformation à distance du côté inférieur (16) et/ou **en ce que** des saillies de support intermédiaires (40) dépassant du côté inférieur (16) du corps de plaque (14) sont prévues en association avec les saillies d'appui (20), sur lesquelles les saillies d'appui (20) peuvent venir s'appuyer lors de leur déformation dans une zone entre la zone de contigüité (24) sur le corps de plaque (14) et son extrémité libre (22) à distance du côté inférieur (16).

2. Plaque de revêtement de sol selon la revendication 1, **caractérisée en ce que** les saillies d'appui (20) sont disposées dans une pluralité de rangées de saillies (R).

3. Plaque de revêtement de sol selon la revendication 2, **caractérisée en ce que** les saillies d'appui (20) de rangées de saillies (R) directement contiguës sont disposées en déport les unes des autres.

4. Plaque de revêtement de sol selon l'une quelconque des revendications 1 à 3, **caractérisée en ce que** les saillies d'appui (20) sont inclinées dans la même direction.

5. Plaque de revêtement de sol selon la revendication 1, **caractérisée en ce que** les saillies d'appui (20) sont disposées sur le corps de plaque (14) avec une orientation d'inclinaison différente.

6. Plaque de revêtement de sol selon l'une quelconque des revendications 1 à 5, **caractérisée en ce que** les saillies d'appui (20) sont réalisées comme une plaque.

7. Plaque de revêtement de sol selon l'une quelconque des revendications 1 à 6, **caractérisée en ce que** les saillies d'appui (20) sont réalisées de manière à se rétrécir en s'éloignant du corps de plaque (14).

8. Plaque de revêtement de sol selon l'une quelconque des revendications 1 à 7, **caractérisée en ce que** les ensembles de saillies de support (34) comportent deux saillies de support (30, 32) se trouvant l'une à côté de l'autre.

9. Plaque de revêtement de sol selon la revendication 8, **caractérisée en ce qu'**au moins deux saillies de support (30, 32) disposées à distance l'une de l'autre sont réalisées dans la zone de contigüité (24) des saillies d'appui (20) sur le corps de plaque (14).

10. Plaque de revêtement de sol selon la revendication 9, **caractérisée en ce que** les saillies de support (30, 32) disposées l'une à côté de l'autre de deux saillies d'appui (20) disposées l'une à côté de l'autre forment l'ensemble de saillies de support (34) pour une autre saillie d'appui (20).

11. Revêtement de sol pour une étable comprenant une pluralité de plaques de revêtement de sol (10) selon l'une quelconque des revendications précédentes.

12. Sol pour une étable, comprenant un revêtement selon la revendication 11 sur un fond solide, en particulier un fond en béton.
